# EUROPÄISCHE PATENTSCHRIFT

(11) **EP 4 492 958 B1**
(45) Veröffentlichungstag und Bekanntmachung des Hinweises auf die Patenterteilung: **04.03.2026**
(21) Anmeldenummer: 23713288.1
(22) Anmeldetag: 14.03.2023
(51) Int. Cl.: A01C 7/08

(54) **PNEUMATISCHE FÖRDERVORRICHTUNG FÜR KÖRNIGES MATERIAL SOWIE LANDWIRTSCHAFTLICHE VERTEILMASCHINE**
PNEUMATIC CONVEYOR DEVICE FOR GRANULAR MATERIAL, AND AGRICULTURAL DISTRIBUTING MACHINE
DISPOSITIF DE TYPE TRANSPORTEUR PNEUMATIQUE POUR MATÉRIAU GRANULAIRE, ET MACHINE DE DISTRIBUTION AGRICOLE

(30) Priorität: 14.03.2022 DE 102022105904
(43) Veröffentlichungstag der Anmeldung: 22.01.2025
(73) Patentinhaber: Lemken GmbH & Co KG, 46519 Alpen (DE)
(72) Erfinder: SURBORG, Carsten, 46519 Alpen (DE); BEIER, Carsten, 33154 Salzkotten (DE)
(86) Internationale Anmeldenummer: PCT/DE2023/100189
(87) Internationale Veröffentlichungsnummer: WO 2023/174481

(56) Entgegenhaltungen:
- US-A- 5 979 343
- US-A1- 2008 295 751
- US-A1- 2021 127 556
- US-B2- 7 669 538

## Beschreibung

Die vorliegende Erfindung betrifft eine pneumatische Fördervorrichtung für körniges oder granulares Material, insbesondere Saatgut und/oder Dünger, umfassend zumindest ein Gebläse mit wenigstens einem Auslass, an den eine Hauptluftzufuhrleitung angeschlossen ist, in welche ein vom Gebläse erzeugter Luftvolumenstrom einströmt, wobei die Hauptluftzufuhrleitung in einen Lufteinlass einer Luftverteilungsvorrichtung zur Steuerung des Luftvolumenstroms einmündet, wobei die Luftverteilungsvorrichtung eine Mehrzahl Anzahl von Luftauslässen aufweist, an die jeweils eine Verbindungsleitung angeschlossen ist, an welche eine Dosiervorrichtung zur Zuführung des granulatförmigen Gutes angeschlossen ist. Weiterhin betrifft die vorliegende Erfindung eine landwirtschaftliche Verteilvorrichtung.

Körnige Materialien, beispielsweise in Form von Saatgut oder Dünger, werden üblicherweise aus wenigstens einem Vorratsbehälter zu einer oder mehreren Abgabeeinheiten mittels einer Fördervorrichtung transportiert. Hierfür werden mechanische Fördervorrichtungen oder pneumatische Fördervorrichtungen eingesetzt. Pneumatische Fördervorrichtungen fördern das körnige Material mittels eines Gebläses durch Verbindungsleitungen von dem Vorratsbehälter, beispielsweise durch eine Verteilvorrichtung und einer dort angeschlossenen Mehrzahl an Leitungen, zu den jeweiligen Ausgabeeinheiten. Die Zufuhr des körnigen Materials aus dem wenigstens einen Vorratsbehälter in die Fördervorrichtung wird dabei mittels einer Dosiervorrichtung gesteuert. Fördervorrichtungen für körnige Materialien sind beispielsweise aus der US 2008/295751 A1, der US 7 669 538 B2, der US 5 979 343 A und der US 2021/127556 A1 bekannt.

Eine pneumatische Fördervorrichtung der eingangs genannten Art sowie eine landwirtschaftliche Verteilvorrichtung ist aus der US 4,779,765 A bekannt. Ein von einem ein Gebläse erzeugter Luftvolumenstrom wird auf zwei Luftzufuhrleitung aufgeteilt, die dem Transport von körnigem Material, welches durch als Dosierwalzen ausgeführte Dosiervorrichtungen der jeweiligen Luftzufuhrleitung zugeführt wird.

Der Erfindung liegt die Aufgabe zugrunde, eine pneumatische Fördervorrichtung der eingangs genannter Art weiterzubilden, welche sich durch eine flexible Einstellung von den Luftauslässen zugeführten Luftfördermengen bei zugleich kompakter Bauweise, insbesondere in Längsrichtung der Verteilvorrichtung, auszeichnet.

Diese Aufgabe wird gelöst durch eine pneumatische Fördervorrichtung mit den Merkmalen des unabhängigen Patentanspruchs 1. Vorteilhafte Ausführungsformen und Weiterbildungen sind den hiervon abhängigen Ansprüchen zu entnehmen. Weiterhin wird die Aufgabe durch eine landwirtschaftliche Verteilvorrichtung gemäß dem Anspruch 15 gelöst.

Gemäß dem Anspruch 1 wird eine pneumatische Fördervorrichtung zur Förderung von körnigem Material, insbesondere Saatgut und/oder Dünger, vorgeschlagen, umfassend ein Gebläse mit wenigstens einem Auslass, an den zumindest eine Hauptluftzufuhrleitung angeschlossen ist, in welche ein vom Gebläse erzeugter Luftvolumenstrom einströmt, wobei die zumindest eine Hauptluftzufuhrleitung in einen Lufteinlass einer Luftverteilungsvorrichtung zur Steuerung des Luftvolumenstroms einmündet, wobei die Luftverteilungsvorrichtung eine vorzugsweise geradzahlige oder durch die Zahl drei teilbare Anzahl von Luftauslässen aufweist, an die jeweils eine Verbindungsleitung angeschlossen ist, an welche eine Dosiervorrichtung zur Zuführung des körnigen Materials angeschlossen ist. Erfindungsgemäß ist vorgesehen, dass die Luftverteilungsvorrichtung als ein zylindrisches Gehäuse mit einem darin angeordneten Drehschieber ausgeführt ist, der zur Veränderung eines Austrittsquerschnitts der Luftauslässe eingerichtet ist, um den zugeführten Luftvolumenstrom für den Transport des von der jeweiligen Dosiervorrichtung kommenden körnigen Materials zu manipulieren.

Der Erfindung liegt die Überlegung zugrunde, den Luftvolumenstrom an unterschiedliche Betriebssituationen anpassen zu können. Insbesondere lässt sich durch die Integration des zur Veränderung des Austrittsquerschnitts der, insbesondere im Wesentlichen kreisförmigen, Luftauslässe eingerichteten Drehschiebers in das Gehäuse eine kompakte Bauform erreichen. Darüber hinaus ermöglicht der Drehschieber eine gezielte Aufteilung des Luftvolumenstroms auf die Luftauslässe, welche zwischen einer vollständigen Beaufschlagung aller Luftauslässe bis zu einer auf die Hälfte beziehungsweise einem Drittel der Luftauslässe beschränkte Beaufschlagung mit dem Luftvolumenstrom reicht. Verschiedene dazwischenliegende Aufteilungen in Teilluftströme sind möglich.

Bevorzugt kann an dem Drehschieber ein Aktor angeordnet sein, durch den der Drehschieber manuell oder automatisch betätigbar ist. Der Aktor kann beispielsweise als ein Elektromotor ausgeführt sein, durch den die Position des Drehschiebers relativ zu den Luftauslässen veränderbar ist. Alternativ kann der Aktor als ein Hebel ausgeführt sein, der von einer Bedienperson manuell zu betätigen ist.

Insbesondere kann der Drehschieber als ein um eine Längsachse des Gehäuses schwenkbarer bogenförmiger Abschnitt ausgeführt sein, welcher sich abschnittsweise in Umfangsrichtung des bogenförmigen Abschnitts ersteckende Ausnehmungen aufweist, die in Abhängigkeit von einer eingestellten Schwenkstellung des bogenförmigen Abschnitts mit den Luftauslässen des Gehäuses zusammenwirken. Der bogenförmige Abschnitt ist konzentrisch zur Längsachse des Gehäuses in diesem angeordnet, so dass die Längsachse zugleich Schwenkachse des Drehschiebers ist. Durch ein Schwenken des bogenförmigen Abschnitts lassen sich die Ausnehmungen gegenüber den Luftauslässen in der Weise verstellen, dass alle Luftauslässe vollständig freigegeben sind, d.h. die Ausnehmungen den jeweiligen Luftauslass vollständig überdecken bis hin zu einer partiellen Abdeckung einer hälftigen Anzahl der Luftauslässe durch die Mantelfläche des Drehschiebers. Im erstgenannten Fall der vollständigen Überdeckung wird der vom Gebläse zugeführte Luftvolumenstrom im Wesentlichen gleichmäßig auf alle Luftauslässe verteilt. Im Fall einer nur partiellen Überdeckung lässt sich das Verhältnis der Verteilung des zugeführten Luftvolumenstroms in Abhängigkeit vom eingestellten Schwenkwinkel des bogenförmigen Abschnitts um seine Schwenkachse, die koaxial zur Längsachse des Gehäuses verläuft, variieren.

Bevorzugt kann der Drehschieber in diskreten Schritten oder stufenlos verstellbar sein. Eine Verstellung des Drehschiebers in diskreten Schritten hat den Vorteil, dass vordefinierte Verhältnisse der Verteilung des zugeführten Luftvolumenstroms auf die Luftauslässe einstellbar ist. Eine stufenlose Verstellung des Drehschiebers ermöglicht eine genauere Anpassung der Verteilung des zugeführten Luftvolumenstroms auf die Luftauslässe. Für eine Einstellung des Verhältnisses der Verteilung des zugeführten Luftvolumenstroms in diskreten Schritten kann der als Hebel ausgeführte Aktor am Gehäuse in Rastpositionen festgestellt werden. Hierzu kann ein Arretiermittel vorgesehen sein. Alternativ kann der Elektromotor als ein Schrittmotor ausgeführt sein, welcher ebenfalls eine Einstellung des Verhältnisses in diskreten Schritten ermöglicht.

Bevorzugt kann das Gehäuse eine kreiszylindrische Form aufweisen, wodurch eine kompaktere Ausgestaltung der Luftverteilungsvorrichtung erreicht wird. Insbesondere ist das Gehäuse bezogen auf die Hauptluftzufuhrleitung und die an den Luftauslässen angeschlossenen Verbindungsleitungen, welche zumindest abschnittsweise im Wesentlichen in eine gemeinsame Richtung weisend verlaufen, quer zu diesen verlaufend angeordnet. Diese zu den Verbindungsleitungen quer verlaufende Anordnung des Gehäuses hat den Vorteil, dass für die Anordnung der Dosiervorrichtungen mehr Bauraum zur Verfügung steht.

Weiter bevorzugt können die Ausnehmungen in Umfangsrichtung des Abschnitts eine Erstreckung aufweisen, welche zumindest dem doppelten des Durchmessers des Austrittsquerschnitts der Luftauslässe entspricht.

Des Weiteren können die Ausnehmungen in axialer Richtung eine Breite aufweisen, welche zumindest dem Durchmesser des Austrittsquerschnitts der Luftauslässe entspricht oder diesen unterschreitet. Durch Verringerung einiger der Austrittsquerschnitte der Ausnehmungen können beispielsweise weniger starke oder abweichende Strömungswiderstände in nachfolgend angeordneten, verschieden langen Leitungen kompensiert werden.

In einer besonderen Ausführungsform können die Ausnehmungen in der Nähe einer Hauptluftzufuhrleitung einen geringeren Öffnungsquerschnitt oder eine geringere Breite aufweisen als weiter von der Hauptluftzufuhrleitung entfernte Ausnehmungen. Mit dieser Ausführungsform werden erhöhte Luftströme, wie sie im Nahbereich der Hauptluftzufuhrleitung auftreten, verringert, um eine gleichmäßigere Luftströmung in allen der Luftauslässen zu erreichen.

Insbesondere können die Ausnehmungen einen im Wesentlichen ellipsenförmigen Öffnungsquerschnitt aufweisen. Unter einen ellipsenförmigen Öffnungsquerschnitt verstehen sich insbesondere solche, welche eine unterschiedliche Breite und Erstreckung entlang der Umfangsrichtung aufweisen, wie sie beispielsweise ein Langloch aufweist.

Bevorzugt können die Ausnehmungen in Umfangsrichtung des Drehschiebers gesehen mit einem wechselweisen Versatz in Umfangsrichtung zueinander angeordnet sein. Die Öffnungsquerschnitte zweier unmittelbar benachbarter Ausnehmungen weisen einen gemeinsamen Überlappungsbereich in Umfangsrichtung auf.

Gemäß einer bevorzugten Weiterbildung können die Luftauslässe achsparallel zur Längsachse des Gehäuses nebeneinander an diesem angeordnet sein. Hierdurch wird das Anbringen und Verlegen der Verbindungsleitungen vereinfacht. Ebenso wird hierdurch eine Vereinfachung der Anbindung der Dosiervorrichtungen an die Verbindungsleitungen vereinfacht.

Insbesondere kann die zumindest eine Hauptluftzufuhrleitung den Luftauslässen gegenüberliegend an dem Gehäuse oder koaxial zum Gehäuse angeordnet sein. Die Hauptluftzufuhrleitung und die an die Luftauslässe angeordneten Verbindungsleitungen können somit abschnittsweise in einer gemeinsamen Ebene liegend angeordnet sein, was sich ebenfalls positiv auf den Bauraumbedarf der pneumatischen Fördervorrichtung auswirkt. Die Hauptluftzufuhrleitung kann, bezogen auf die Mitte des Gehäuses, symmetrisch oder asymmetrisch an diesem angeordnet sein. Eine koaxiale Anbindung der Hauptluftzufuhrleitung an ein Ende des Gehäuses ist insbesondere dann vorteilhaft, wenn das Gehäuse zugleich einen, vorzugsweise tragenden, Bestandteil eines Maschinenrahmens bildet.

Gemäß einer Weiterbildung können die Luftauslässe paarweise nebeneinander oder in einer Dreiergruppe angeordnet sein, wobei der Abstand der Luftauslässe zumindest eines Paares oder einer Dreiergruppe untereinander geringer als der Abstand zu einem benachbarten Paar oder einer Gruppe von Luftauslässen ist. Insbesondere bei nachfolgend kaskadiert angeordneten Dosiervorrichtungen ist eine gruppenweise Anordnungen von Leitungen und somit deren zugehörigen Luftauslässe von Vorteil.

Insbesondere kann jedem Paar Luftauslässe jeweils zwei der Dosiervorrichtungen in Förderrichtung nachgeordnet sein, wobei beide Dosiervorrichtungen mit beiden den jeweiligen Luftauslässen zugeordneten Verbindungsleitungen verbindbar sind, um wahlweise das Material einer Dosiervorrichtung oder beider Dosiervorrichtungen einer Verbindungsleitung oder beiden Verbindungsleitungen zuzuführen.

Hierzu kann jede Dosiervorrichtung ein manuell oder durch einen Aktor betätigbares Umschaltelement aufweisen, welches die jeweilige Dosiervorrichtung mit einer oder beiden Verbindungsleitungen verbindet oder von dieser trennt. Beispielsweise können die Dosiervorrichtungen als Umschaltklappen ausgeführte Umschaltelemente aufweisen, durch die wechselweise eine Zuführung des Materials zu nur einer der Verbindungsleitungen oder zu beiden Verbindungsleitungen möglich ist. Die Dosiervorrichtungen ihrerseits sind schaltbar ausgeführt, so dass alle Verbindungsleitungen von nur der Hälfte der Dosiervorrichtungen mit Material beschickt werden kann.

Weiterhin wird die eingangs gestellt Aufgabe durch eine landwirtschaftliche Verteilmaschine zur Förderung von aus zumindest einem Vorratsbehälter entnommenen körnigen Material mit einer pneumatischen Fördervorrichtung gelöst, die nach einem der Ansprüche 1 bis 14 ausgebildet ist. Es darf auf alle Ausführungen zu der vorschlagsgemäßen pneumatischen Fördervorrichtung verwiesen werden.

Die vorliegende Erfindung wird nachstehend anhand eines in den Zeichnungen dargestellten Ausführungsbeispieles näher erläutert.

Es zeigen:
- Fig. 1: eine schematische Darstellung eines Zugfahrzeugs und einer landwirtschaftlichen Verteilmaschine;
- Fig. 2: eine Teilansicht auf eine pneumatische Fördervorrichtung;
- Fig. 3: eine perspektivische Teilansicht der pneumatischen Fördervorrichtung gemäß Fig. 2;
- Fig. 4: eine perspektivische Ansicht einer Luftverteilungsvorrichtung;
- Fig. 5: eine schematische Teilschnittansicht der Luftverteilungsvorrichtung gemäß Fig. 4 in einer ersten exemplarischen Schaltstellung;
- Fig. 6: eine schematische Teilschnittansicht der Luftverteilungsvorrichtung gemäß Fig. 4 in einer zweiten exemplarischen Schaltstellung;
- Fig. 7: eine schematische Teilschnittansicht der Luftverteilungsvorrichtung gemäß Fig. 4 in einer dritten exemplarischen Schaltstellung; und
- Fig. 8: eine schematische Teilschnittansicht der Luftverteilungsvorrichtung gemäß Fig. 4 in einer vierten exemplarischen Schaltstellung.

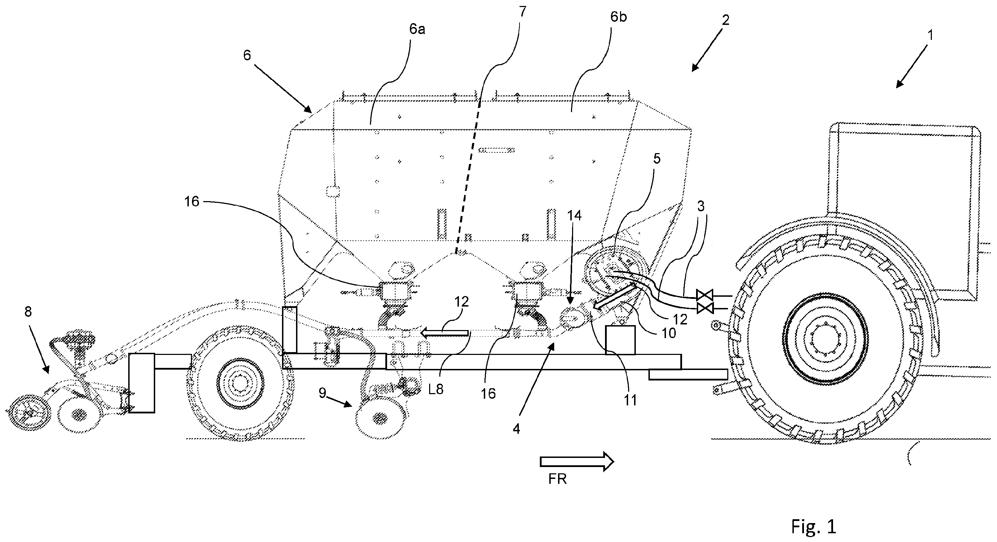

In Fig. 1 ist eine schematische Darstellung eines Zugfahrzeugs 1, insbesondere eines Traktors, und einer daran angeordneten landwirtschaftlichen Verteilmaschine 2 gezeigt. Das Zugfahrzeug 1 dient dazu, die Verteilmaschine 2 über eine zu bearbeitende Fläche in einer Fahrtrichtung zu bewegen und mit Antriebsenergie zu versorgen. Lediglich beispielhaft sind zwei Versorgungsleitungen 3 dargestellt, welche der Bereitstellung eines Hydraulikfluids und/oder elektrischer Energie zum Antreiben eines, insbesondere hydraulisch angetrieben, Gebläses 5 einer pneumatischen Fördervorrichtung 4 der Verteilvorrichtung 2 dienen. Die Verteilmaschine 2 weist einen Vorratsbehälter 6, der durch eine Trennwand 7 in zwei Segmente 6a, 6b unterteilt ist. Alternativ können zwei separate Vorratsbehälter 6 vorgesehen sein. In dem Vorratsbehälter 6 befindet sich körniges Material, insbesondere Saatgut und/oder Dünger, welches durch die Verteilmaschine 2 ausgebracht wird. Das körnige Material wird durch die pneumatische Fördervorrichtung 4 zu Abgabeeinheiten 8, 9 gefördert, welche das körnige Material in den Boden einbringen. Die jeweilige Abgabeeinheit 8 kann ein oder mehrere Säschare aufweisen, die jeweilige Abgabeeinheit 9 weist ein oder mehrere Düngerschare auf. Es ist eine geradzahlige oder durch drei teilbare Anzahl von Abgabeeinheiten 8, 9 vorgesehen.

Das Gebläse 5 ist mit wenigstens einem Auslass 10 versehen, an den zumindest eine Hauptluftzufuhrleitung 11 angeschlossen ist, in welche ein vom Gebläse 5 erzeugter Luftvolumenstrom 12 einströmt. Die zumindest eine Hauptluftzufuhrleitung 11 mündet in einen Lufteinlass 13 einer Luftverteilungsvorrichtung 14 zur Aufteilung des Luftvolumenstroms 12 ein. Die Luftverteilungsvorrichtung 14 weist eine geradzahlige Anzahl von Luftauslässen auf, an die jeweils eine Verbindungsleitung L1, L2, ..., L8 angeschlossen ist.

Aus den einzelnen Segmenten 6a, 6b des Vorratsbehälter 6 wird das körnige Material mittels Dosiervorrichtungen 16 den einzelnen Verbindungsleitungen L1, L2, ..., L8 der Fördervorrichtung 4 zugeführt. Durch die Dosiervorrichtungen 16 erfolgt eine genaue Dosierung der Menge des von der Fördervorrichtung 4 zu Abgabeeinheiten 8, 9 zu fördernden Materials. Die Dosiervorrichtungen 16 sind dabei unterhalb des Vorratsbehälters 6 zwischen dem Vorratsbehälter 6 und den Verbindungsleitungen L1, L2, ..., L8 der Fördervorrichtung 4 angeordnet. Gemäß der in der in Fig. 1 gezeigten landwirtschaftlichen Verteilmaschine 2 wird das körnige Material im Wesentlichen durch die Schwerkraft aus dem jeweiligen Segment 6a, 6b des Vorratsbehälters 6 der jeweiligen Dosiervorrichtung 16 zugeführt. Die Dosiervorrichtungen 16 können in zwei oder mehr Gruppen G1, G2 unterteilt sein, wobei jede Gruppe G1, G2 eine der hälftigen Anzahl an Verbindungsleitungen L1, L2, ..., L8 entsprechende Anzahl von Dosiervorrichtungen 16 umfasst. Die Gruppe G1 mit Dosiervorrichtungen 16 ist unmittelbar hinter der Luftverteilungsvorrichtung 14 angeordnet. Die Gruppe G2 mit Dosiervorrichtungen 16 ist in Förderrichtung FR des körnigen Materials gesehen diesen nachgeordnet angeordnet.

Die Verbindungsleitungen L1, L3, L5 und L7 können der Gruppe G2 zugeordnet sein, welchen das pneumatisch zu fördernde Saatgut durch die Dosiervorrichtungen 16 der Gruppe G2 zugeführt wird. Die Verbindungsleitungen L2, L4, L6 und L8 können der Gruppe G1 zugeordnet sein, welchen der pneumatisch zu fördernde Dünger durch die Dosiervorrichtungen 16 der Gruppe G1 zugeführt wird.

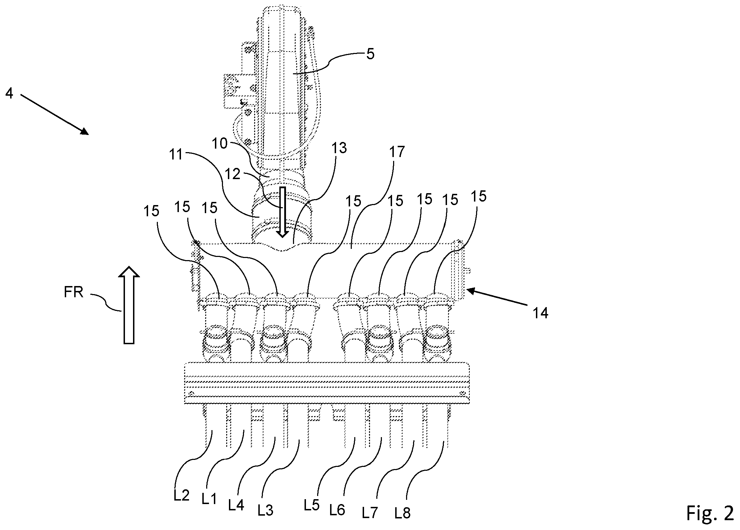

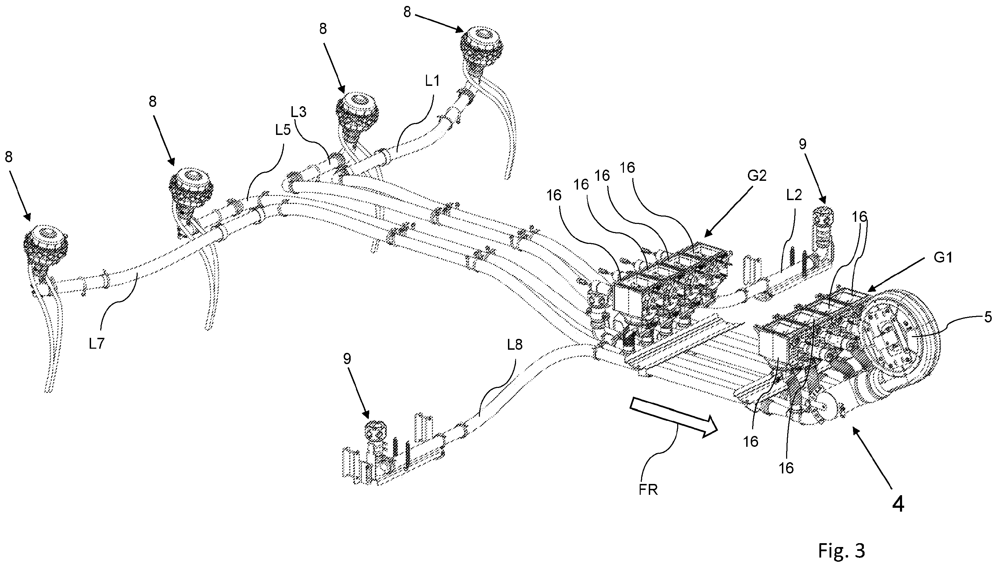

In Fig. 2 ist eine Teilansicht auf die pneumatische Fördervorrichtung 4 in einer Ansicht von oben dargestellt. Die Darstellung in Fig. 3 zeigt eine perspektivische Teilansicht der pneumatischen Fördervorrichtung 4 gemäß Fig. 2.

Die Luftverteilvorrichtung 14 umfasst ein zylindrisches Gehäuse 17. Das Gehäuse 17 der Luftverteilvorrichtung 14 ist bezogen auf die Hauptluftzufuhrleitung 11 und die an den Luftauslässen 15 angeschlossenen Verbindungsleitungen L1, L2, ..., L8, welche zumindest abschnittsweise im Wesentlichen in eine gemeinsame Richtung weisend verlaufen, quer zu diesen verlaufend angeordnet. Die Verbindungsleitungen L1, L2, ..., L8 verlaufen abschnittsweise in Längsrichtung der Verteilmaschine 2. Bevorzugt weist das Gehäuse 17 eine kreiszylindrische Form auf. Die quer zur Längsachse der Verteilmaschine 2 orientierte Anordnung der Luftverteilvorrichtung 14 ermögliche eine bauraumoptimierte Anordnung dieser sowie weiterer Komponenten der der pneumatischen Fördervorrichtung 4 wie beispielsweise des Gebläses 5, was insbesondere aus Fig. 1 deutlich wird.

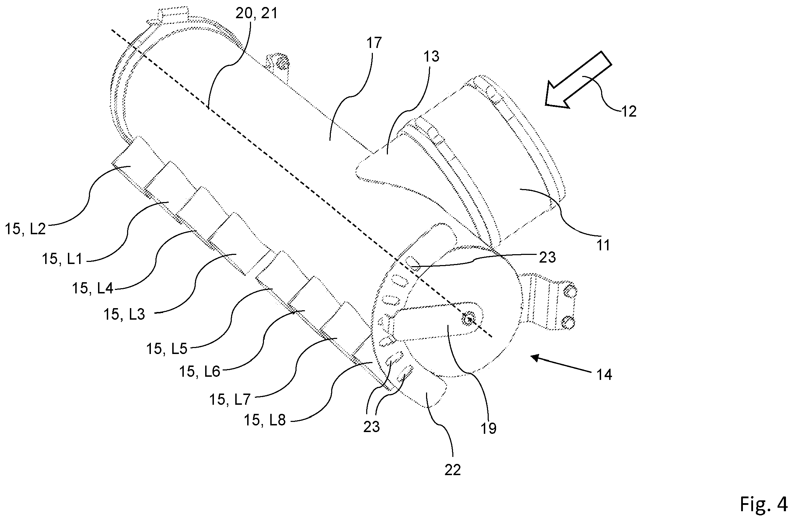

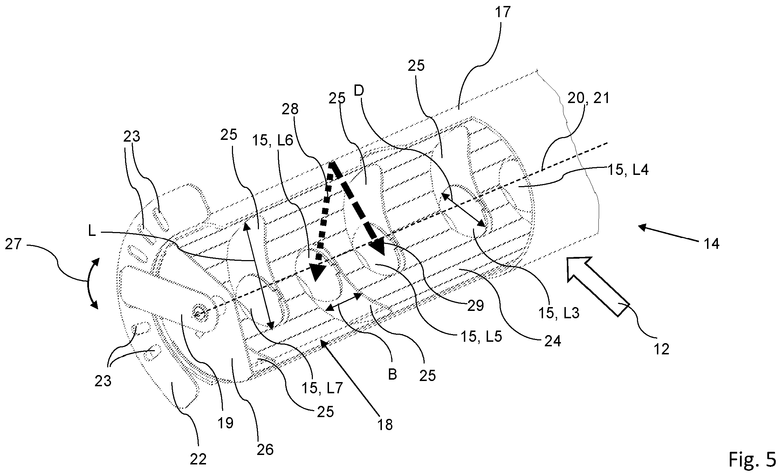

Die Darstellung in Fig. 4 zeigt eine perspektivische Ansicht der Luftverteilungsvorrichtung 14. Die Luftverteilungsvorrichtung 14 ist als das zylindrische Gehäuse 17 mit einem darin angeordneten Drehschieber 20 ausgeführt, wie in den nachfolgenden Fig. 5 bis 8 näher erläutert wird. Der in dem Gehäuse 17 angeordnete Drehschieber 18 ist zur Veränderung eines Austrittsquerschnitts der Luftauslässe 15 eingerichtet, um den zugeführten Luftvolumenstrom 12 für den Transport des von der jeweiligen Dosiervorrichtung 16 kommenden körnigen Materials zu manipulieren. Zur Betätigung des Drehschiebers 18 ist ein als Hebel 19 ausgeführter Aktor um eine zur Längsachse 20 des Gehäuses 17 koaxiale Schwenkachse 21 schwenkbar an dem Drehschieber 18 befestigt. Um den Drehschieber 18 in einer definierten Stellung zu fixieren, ist außenseitig an dem Gehäuse 17 ein ringsegementförmiger Abschnitt 22 benachbart zu dem Hebel 19 angeordnet. Der ringsegementförmige Abschnitt 22 weist bezogen auf die Schwenkachse 21 sich in radialer Richtung erstreckende Aussparungen 23, beispielsweise in Form von Langlöchern, auf. Am freien Ende des Hebels 19 ist eine - nicht sichtbar dargestellte - Rastnase angeordnet, die mit einer der Aussparungen 23 in Eingriff bringbar ist, um den Drehschieber 18 in einer gewünschten Stellung zu positionieren. In Abhängigkeit von der Stellung des Hebels 19 respektive des Drehschiebers 18 wird der Luftvolumenstrom 12 in Teilvolumenströme 28, 29 aufgeteilt, was weiter unter noch näher ausgeführt wird.

In Fig. 5 ist eine schematische Teilschnittansicht der Luftverteilungsvorrichtung 14 gemäß Fig. 4 in einer ersten Schaltstellung des Drehschiebers 18 dargestellt. Der Drehschieber 18 ist als ein um die Längsachse 20 des Gehäuses 17 schwenkbarer kreisbogenförmiger Abschnitt 24 ausgeführt. Sowohl das Gehäuse 17 als auch der Drehschieber 18 bzw. sein kreisbogen- oder zylindersegmentförmiger Abschnitt können auch als ein polygonförmig gekanteter Blechzuschnitt ausgeführt sein. Dabei nähern sich die Zahl der Abkantungen wie ein Vieleck einer Kreisform möglichst an. Der kreisbogenförmige Abschnitt 24 weist sich abschnittsweise in Umfangsrichtung des Abschnitts 24 ersteckende Ausnehmungen 25 auf, die in Abhängigkeit von der eingestellten Position, d.h. des durch den Aktor eingestellten Schwenkwinkels, des bogenförmigen Abschnitts 24 mit den Luftauslässen 15 des Gehäuses 17 zusammenwirken. In axialer Richtung ist endseitig zumindest ein kreissektorförmiger Abschnitt 26 an dem kreisbogenförmigen Abschnitt 24 angeordnet. Mit den kreissektorförmigen Abschnitt 26 ist der kreisbogenförmige Abschnitt 24 am Gehäuse 17 der Luftverteilungsvorrichtung 14 schwenkbar gelagert. An einem der beiden kreissektorförmigen Abschnitte 26 greift der Hebel 19 drehfest an, um diesen zusammen mit dem kreisbogenförmigen Abschnitt 24 um die Schwenkachse 21 in Schwenkrichtung 27 verschwenken zu können.

Der Drehschieber 18 lässt sich, wie in den Fig. 4 bis 8 dargestellt, in diskreten Schritten in Schwenkrichtung 27, insbesondere manuell, verstellen. Die Schrittweite, d.h. der Abstand der Aussparungen 23 in Umfangsrichtung zueinander, bestimmt dabei das Verhältnis der Verteilung des zugeführten Luftvolumenstromes 12. Alternativ kann der Drehschieber 18 stufenlos verstellbar sein. Hierzu kann an einem der kreissektorförmigen Abschnitte 26 beispielsweise ein als Elektromotor ausgeführter Aktor angeordnet sein. Insbesondere kann der als Elektromotor ausgeführte Aktor eine automatische Verstellung bewirken. So kann von einer Steuereinheit des Zugfahrzeugs 1 oder der Verteilmaschine 2 ein Steuerbefehl generiert werden, welcher der Ansteuerung des Aktors dient, um einen Schwenkwinkel einzustellen, der einem von einer Bedienperson vorgegebenen Verhältnis der Aufteilung des Luftvolumenstroms 12 in die Teilvolumenströme 28, 29 entspricht.

Die Ausnehmungen 25 weisen in Umfangsrichtung des kreisbogenförmigen Abschnitts 24 eine Erstreckung L auf, welche zumindest dem doppelten eines Durchmessers D des Austrittsquerschnitts der Luftauslässe 15 entspricht. Die Ausnehmungen 25 weisen in axialer Richtung eine Breite B auf, welche zumindest dem Durchmesser D des Austrittsquerschnitts der Luftauslässe 25 entspricht. Bevorzugt weisen die Ausnehmungen 25 einen im Wesentlichen ellipsenförmigen Öffnungsquerschnitt auf.

Die Ausnehmungen 25 sind in Umfangsrichtung des Drehschiebers 18 respektive des kreisbogenförmigen Abschnitts 24 gesehen mit einem wechselweisen Versatz in Umfangsrichtung zueinander angeordnet sind. Die Luftauslässe 15 sind achsparallel zur Längsachse 20 des Gehäuses 17 nebeneinander an diesem angeordnet. Dabei sind die Luftauslässe 15 paarweise nebeneinander angeordnet sind, wobei der Abstand der Luftauslässe 15 eines Paares untereinander geringer als der Abstand zu einem benachbarten Paar Luftauslässe 15 sein kann. Im dargestellten Ausführungsbeispiel sind jeweils vier Luftauslässe 15, mit an diesen angeordneten Verbindungsleitungen L8, L7, L6, L5, gruppenweise mit gleichem axialen Abstand zueinander angeordnet. Die weiteren vier Luftauslässe 15, mit an diesen angeordneten Verbindungsleitungen L1, L2, L3, L4, sind ebenfalls gruppenweise mit gleichem axialen Abstand zueinander angeordnet. Zwischen den mittigen Luftauslässen 15, an denen die Verbindungsleitungen L5 und L3 angeordnet sind, besteht ein größerer axialer Abstand. Zudem können die Luftauslässe 15 mit den Verbindungsleitungen L8, L7, L6, L5 spiegelsymmetrisch zu den Luftauslässen 15 mit den Verbindungsleitungen L1, L2, L3, L4 angeordnet sein. Dies bietet Vorteile bei der Schlauchverlegung. Jedem Paar Luftauslässe 15 sind jeweils zwei korrespondierend angeordnete Ausnehmungen 25 des kreisbogenförmigen Abschnitts 24 zugeordnet, wobei sich die Ausnehmungen 25 in Umfangsrichtung gesehen gegensinnig erstrecken, d.h. zueinander versetzt angeordnet sind. Je zwei einem Paar Luftauslässen 15 zugeordnete Ausnehmungen 25 weisen einen gemeinsamen Überlappungsbereich auf, in welchem beide Luftauslässe 15 eines Paares vollständig freigegeben sind, wie aus Fig. 5 ersichtlich.

In Fig. 5 ist, stellvertretend für alle paarweise angeordneten Luftauslässe 15, für ein Paar Luftauslässe 15 die Aufteilung des Luftvolumenstroms 12 in zwei anteilige Teilvolumenströme 28 und 29 durch den Drehschieber 18 dargestellt. Der Hebel 19 befindet sich in einer Mittenstellung, in welcher alle Luftauslässe 15 durch die Ausnehmungen 25 vollständig freigegeben sind. Entsprechend verteilt sich der zugeführte Luftvolumenstrom 12 gleichmäßig auf alle Luftauslässe 15, wobei jede der Verbindungsleitungen L1, L3, L5 und L7 sowie L2, L4, L6 und L8 mit gleichgroßen Teilvolumenströmen 28 für Dünger bzw. Teilvolumenströmen 29 für Saat beaufschlagt wird. Bezogen auf die paarweise angeordneten Luftauslässe 15 findet eine Aufteilung des Luftvolumenstroms 12 in einem Verhältnis von im Wesentlichen 50:50 statt.

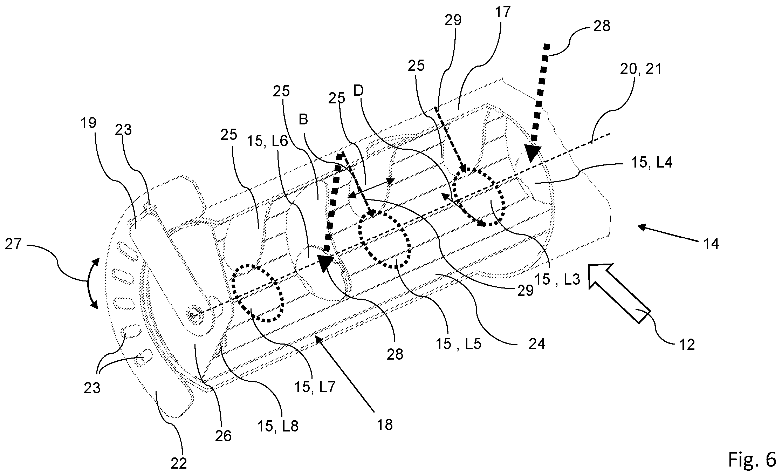

Die Darstellung in Fig. 6 zeigt eine schematische Teilschnittansicht der Luftverteilungsvorrichtung 14 gemäß Fig. 4 in einer zweiten exemplarischen Schaltstellung. Wie aus der Stellung des Hebels 19 ersichtlich, wurde der Drehschieber 18 in eine Schwenkrichtung 27 bewegt, in welcher die Luftauslässe 15, an welchen die Verbindungsleitungen L1, L3, L5 und L7 angeschlossen sind, im Wesentlichen durch die Mantelfläche des Drehschiebers 18 abgedeckt sind, während die Luftauslässe 15, an welchen die Verbindungsleitungen L2, L4, L und L8 angeschlossen sind, vollständig weiterhin freigegeben sind. Bezogen auf die paarweise angeordneten Luftauslässe 15 findet eine Aufteilung des Luftvolumenstroms 12 die jeweiligen Teilströme 28 und 29 in einem Verhältnis von etwa 90:10 statt.

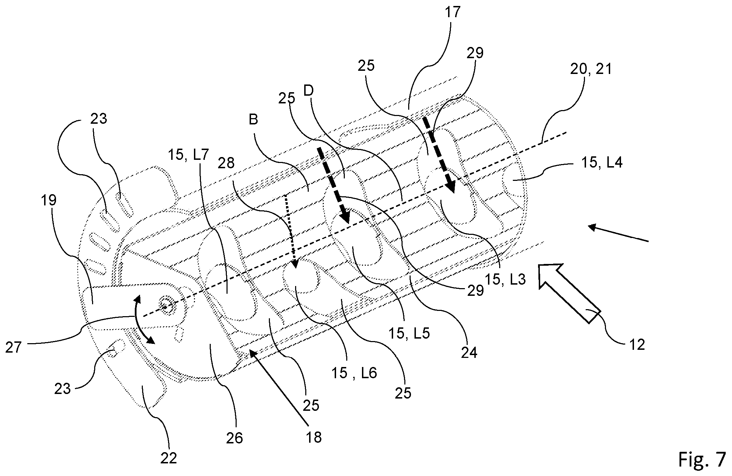

In Fig. 7 ist eine schematische Teilschnittansicht der Luftverteilungsvorrichtung gemäß Fig. 4 in einer dritten exemplarischen Schaltstellung dargestellt. Wie aus der Stellung des Hebels 19 ersichtlich, wurde der Drehschieber 18 in eine Schwenkrichtung 27 bewegt, in welcher die Luftauslässe 15, an welchen die Verbindungsleitungen L1, L3, L5 und L7 angeschlossen sind, vollständig weiterhin freigegeben sind, während die Luftauslässe 15, an welchen die Verbindungsleitungen L2, L4, L und L8 angeschlossen sind, abschnittsweise durch die Mantelfläche des Drehschiebers 18 abgedeckt sind. Bezogen auf die paarweise angeordneten Luftauslässe 15 findet eine Aufteilung des Luftvolumenstroms 12 die jeweiligen Teilströme 28 und 29 in einem Verhältnis von etwa 30:70 statt.

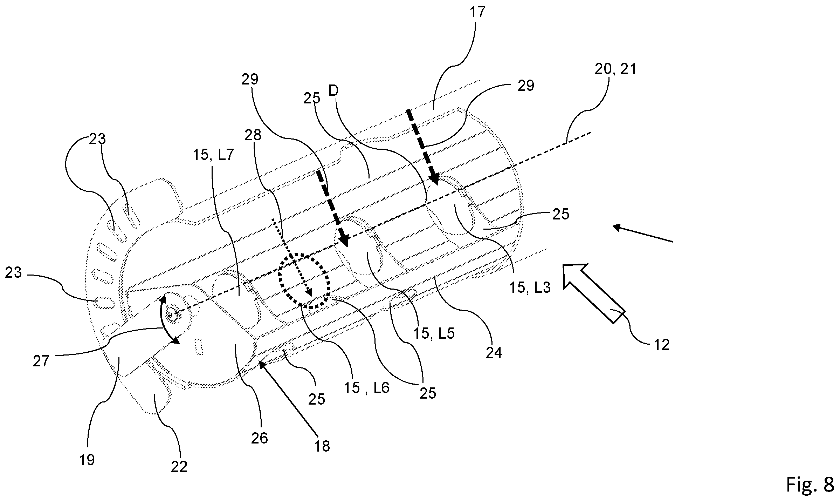

Die Darstellung in Fig. 8 zeigt eine schematische Teilschnittansicht der Luftverteilungsvorrichtung 14 gemäß Fig. 4 in einer vierten exemplarischen Schaltstellung. Wie aus der Stellung des Hebels 19 ersichtlich, wurde der Drehschieber 18 in eine Schwenkrichtung 27 bewegt, in welcher die Luftauslässe 15, an welchen die Verbindungsleitungen L2, L4, L6 und L7 angeschlossen sind, im Wesentlichen durch die Mantelfläche des Drehschiebers 18 abgedeckt sind, während die Luftauslässe 15, an welchen die Verbindungsleitungen L1, L3, L5 und L7 angeschlossen sind, vollständig weiterhin freigegeben sind. Bezogen auf die paarweise angeordneten Luftauslässe 15 findet eine Aufteilung des Luftvolumenstroms 12 die jeweiligen Teilströme 28 und 29 in einem Verhältnis von etwa 10:90 statt.

Wie weiter ober bereits ausgeführt, wurden die beispielhaften Einstellmöglichkeiten in den Fig. 5 bis 8 anhand der in diskreten Schritten um die Schwenkachse 21 vorgenommene Verstellung des als Hebel 19 ausgeführten Aktors in Schwenkrichtung 27 beschrieben. Eine stufenlose Einstellung mittels eines als Elektromotors ausgeführten Aktors ist ebenfalls denkbar, woraus neben einer Automatisierung der Verstellung bzw. Einstellung eine feinere Abstufung der Aufteilung der die jeweiligen Teilströme 28 und 29 erreicht werden kann.

**Bezugszeichenliste**

| | | | |
|---|---|---|---|
| 1 | Zugfahrzeug | 28 | Teilvolumenstrom |
| 2 | Verteilmaschine | 29 | Teilvolumenstrom |
| 3 | Versorgungsleitung | B | Breite von 25 |
| 4 | Fördervorrichtung | D | Durchmesser von 15 |
| 5 | Gebläse | L | Erstreckung von 25 |
| 6 | Vorratsbehälter | FR | Förderrichtung |
| 6a | Segment | G1 | Gruppe |
| 6b | Segment | G2 | Gruppe |
| 7 | Trennwand | L1 | Verbindungsleitung |
| 8 | Abgabeeinheit | L2 | Verbindungsleitung |
| 9 | Abgabeeinheit | L3 | Verbindungsleitung |
| 10 | Auslass | L4 | Verbindungsleitung |
| 11 | Hauptluftzufuhrleitung | L5 | Verbindungsleitung |
| 12 | Luftvolumenstrom | L6 | Verbindungsleitung |
| 13 | Lufteinlass | L7 | Verbindungsleitung |
| 14 | Luftverteilungsvorrichtung | L8 | Verbindungsleitung |
| 15 | Luftauslass | | |
| 16 | Dosiervorrichtung | | |
| 17 | Gehäuse | | |
| 18 | Drehschieber | | |
| 19 | Hebel | | |
| 20 | Längsachse | | |
| 21 | Schwenkachse | | |
| 22 | Ringsegementförmiger Abschnitt | | |
| 23 | Aussparung | | |
| 24 | Bogenförmiger Abschnitt | | |
| 25 | Ausnehmung | | |
| 26 | Kreissektorförmiger Abschnitt | | |
| 27 | Schwenkrichtung | | |

## Patentansprüche

1. Pneumatische Fördervorrichtung (4) zur Förderung von körnigem oder granularem Material, insbesondere Saatgut und/oder Dünger, umfassend zumindest ein Gebläse (5) mit wenigstens einem Auslass (10), an den zumindest eine Hauptluftzufuhrleitung (11) angeschlossen ist, in welche ein vom Gebläse (5) erzeugter Luftvolumenstrom (12) einströmt, wobei die zumindest eine Hauptluftzufuhrleitung (11) in einen Lufteinlass (13) einer Luftverteilungsvorrichtung (14) zur Steuerung des Luftvolumenstroms (12) einmündet, wobei die Luftverteilungsvorrichtung (14) eine geradzahlige oder durch drei teilbare Anzahl von Luftauslässen (15) aufweist, an die jeweils eine Verbindungsleitung (L1, L2, L3, ..., L8) angeschlossen ist, an welche eine Dosiervorrichtung (16) zur Zuführung des körnigen Materials angeschlossen ist, wobei die Luftverteilungsvorrichtung (14) als ein zylindrisches Gehäuse (17) mit einem darin angeordneten Drehschieber (18) ausgeführt ist, der zur Veränderung eines Austrittsquerschnitts der Luftauslässe (15) eingerichtet ist, um den zugeführten Luftvolumenstrom (12) für den Transport des von der jeweiligen Dosiervorrichtung (16) kommenden körnigen Materials zu manipulieren.

2. Pneumatische Fördervorrichtung (4) nach Anspruch 1, **dadurch gekennzeichnet, dass** an dem Drehschieber (18) ein Aktor (19) angeordnet ist, durch den der Drehschieber (18) manuell oder automatisch betätigbar ist.

3. Pneumatische Fördervorrichtung (4) nach Anspruch 1 oder 2, **dadurch gekennzeichnet, dass** der Drehschieber (18) in diskreten Schritten oder stufenlos verstellbar ist.

4. Pneumatische Fördervorrichtung (4) nach einem der Ansprüche 1 bis 3, **dadurch gekennzeichnet, dass** das Gehäuse (17) eine kreiszylindrische Form aufweist.

5. Pneumatische Fördervorrichtung (4) nacheinem der vorangehenden Ansprüche, **dadurch gekennzeichnet, dass** der Drehschieber (18) als ein um eine Längsachse (20) des Gehäuses (17) schwenkbarer bogenförmiger Abschnitt (24) ausgeführt ist, welcher sich abschnittsweise in Umfangsrichtung des Abschnitts (24) ersteckende Ausnehmungen (25) aufweist, die in Abhängigkeit von einer eingestellten Schwenkstellung des bogenförmigen Abschnitts (24) mit den Luftauslässen (15) des Gehäuses (17) zusammenwirken.

6. Pneumatische Fördervorrichtung (4) nach Anspruch 5, **dadurch gekennzeichnet, dass** die Ausnehmungen (25) in Umfangsrichtung des Abschnitts (24) eine Erstreckung (L) aufweisen, welche zumindest dem doppelten eines Durchmessers (D) des Austrittsquerschnitts der Luftauslässe (15) entspricht.

7. Pneumatische Fördervorrichtung (4) nach einem der Ansprüche 5 oder 6, **dadurch gekennzeichnet, dass** die Ausnehmungen (25) in axialer Richtung eine Breite (B) aufweisen, welche zumindest zumindest dem Durchmesser (D) des Austrittsquerschnitts der Luftauslässe (15) entspricht oder diesen unterschreitet.

8. Pneumatische Fördervorrichtung (4) nach einem der Ansprüche 5 bis 7, **dadurch gekennzeichnet, dass** die Ausnehmungen (25) in der Nähe einer Hauptluftzufuhrleitung (11) einen geringeren Öffnungsquerschnitt oder eine geringere Breite (B) aufweisen als weiter von der Hauptluftzufuhrleitung (11) entfernte Ausnehmungen (25).

9. Pneumatische Fördervorrichtung (4) einem der Ansprüche 5 bis 7, **dadurch gekennzeichnet, dass** die Ausnehmungen (25) einen im Wesentlichen ellipsenförmigen Öffnungsquerschnitt aufweisen.

10. Pneumatische Fördervorrichtung (4) einem der Ansprüche 5 bis 8, **dadurch gekennzeichnet, dass** die Ausnehmungen (25) in Umfangsrichtung des Drehschiebers (18) gesehen mit einem wechselweisen Versatz in Umfangsrichtung zueinander angeordnet sind.

11. Pneumatische Fördervorrichtung (4) nach einem der Ansprüche 1 bis 9, **dadurch gekennzeichnet, dass** die Luftauslässe (15) achsparallel zur Längsachse (20) des Gehäuses (17) nebeneinander an diesem angeordnet sind.

12. Pneumatische Fördervorrichtung (4) nach Anspruch 10, **dadurch gekennzeichnet, dass** die zumindest eine Hauptluftzufuhrleitung (11) den Luftauslässen (15) gegenüberliegend an dem Gehäuse (17) oder koaxial zum Gehäuse (17) angeordnet ist.

13. Pneumatische Fördervorrichtung (4) nach Anspruch 10 oder 11, **dadurch gekennzeichnet, dass** die Luftauslässe (15) paarweise nebeneinander oder in einer Dreiergruppe angeordnet sind, wobei der Abstand der Luftauslässe (15) zumindest eines Paares oder einer Gruppe untereinander geringer als der Abstand zu einem benachbarten Paar oder einer Gruppe von Luftauslässen (15) ist.

14. Pneumatische Fördervorrichtung (4) nach Anspruch 12, **dadurch gekennzeichnet, dass** jedem Paar Luftauslässe (15) jeweils zwei der Dosiervorrichtungen (16) in Förderrichtung (FR) nachgeordnet sind, wobei beide Dosiervorrichtungen (16) mit beiden den jeweiligen Luftauslässen (15) zugeordneten Verbindungsleitungen (L1, L2, L3, ..., L8) verbindbar sind, um wahlweise das Material einer Dosiervorrichtung (16) oder beider Dosiervorrichtungen (16) einer Verbindungsleitung (L1, L2, L3, ..., L8) oder beiden Verbindungsleitungen (L1, L2, L3, ..., L8) zuzuführen.

15. Pneumatische Fördervorrichtung (4) nach Anspruch 13, **dadurch gekennzeichnet, dass** jede Dosiervorrichtung (16) ein manuell oder durch einen Aktor betätigbares Umschaltelement aufweist, welches die jeweilige Dosiervorrichtung (16) mit einer oder beiden Verbindungsleitungen (L1, L2, L3, ..., L8) verbindet oder von dieser trennt.

16. Landwirtschaftliche Verteilmaschine (2) zur Förderung von aus zumindest einem Vorratsbehälter (6) entnommenen körnigen Material mit einer pneumatischen Fördervorrichtung (4) gemäß einem der Ansprüche 1 bis 14.

## Claims

1. A pneumatic conveying device (4) for conveying granular material, in particular seeds and/or fertiliser, including at least one blower (5) having at least one outlet (10), to which at least one main air supply line (11) is connected, into which flows an volumetric air flow (12) generated by the blower (5), wherein the at least one main air supply line (11) leads into an air inlet (13) of an air distribution device (14) for controlling the volumetric air flow (12), wherein the air distribution device (14) has a number of air outlets (15) that are even or divisible by 3, to which a connecting line each (L1, L2, L3, ... L8) is connected, to which a metering device (16) for supplying the granular material is connected, wherein the air distribution device (14) is embodied as a cylindrical housing (17) with a rotary slide valve (18) arranged therein, which is equipped for changing an outlet cross-section of the air outlets (15) in order to manipulate the supplied volumetric air flow (12) for transporting the granular material coming from the respective metering device (16).

2. The pneumatic conveying device (4) according to Claim 1, **characterised in that** on the rotary slide valve (18) an actuator (19) is arranged, through which the rotary slide valve (18) is manually or automatically actuatable.

3. The pneumatic conveying device (4) according to Claim 1 or 2, **characterised in that** the rotary slide valve (18) is adjustable in discrete steps or continuously.

4. The pneumatic conveying device (4) according to any one of the Claims 1 to 3, **characterised in that** the housing (17) has a circular-cylindrical shape.

5. The pneumatic conveying device (4) according to any one of the preceding claims, **characterised in that** the rotary slide valve (18) is embodied as an arcuate section (24) pivotable about a longitudinal axis (20) of the housing (17), which comprises recesses (25) extending in the circumferential direction of the section (24) in sections, which depending on a set pivot position of the arcuate section (24), interact with the air outlets (15) of the housing (17).

6. The pneumatic conveying device (4) according to Claim 5, **characterised in that** the recesses (25) in the circumferential direction of the section (24) have an extent (L) which corresponds at least to twice a diameter (D) of the outlet cross-section of the air outlets (15).

7. The pneumatic conveying device (4) according to Claim 5 or 6, **characterised in that** the recesses (25) in the axial direction have a width (B) which corresponds at least to the diameter (D) of the outlet cross-section of the air outlets (15) or is less than this.

8. The pneumatic conveying device (4) according to any one of the Claims 5 to 7, **characterised in that** the recesses (25) in the vicinity of a main air supply line (11) have a smaller opening cross-section or a smaller width (B) than recesses (25) further distant from the main air supply line (11).

9. The pneumatic conveying device (4) according to any one of the Claims 5 to 7, **characterised in that** the recesses (25) have a substantially elliptical opening cross-section.

10. The pneumatic conveying device (4) according to any one of the Claims 5 to 8, **characterised in that** the recesses (25), seen in the circumferential direction of the rotary slide valve (18), are arranged with an alternating offset in the circumferential direction relative to one another.

11. The pneumatic conveying device (4) according to any one of the Claims 1 to 9, **characterised in that** the air outlets (15) are arranged axially parallel to the longitudinal axis (20) of the housing (17) next to one another on the same.

12. The pneumatic conveying device (4) according to Claim 10, **characterised in that** the at least one main air supply line (11) is arranged located opposite the air outlets (15) on the housing (17) or coaxially to the housing (17).

13. The pneumatic conveying device (4) according to Claim 10 or 11, **characterised in that** the air outlets (15) are arranged in pairs next to one another or in a group of three, wherein the distance of the air outlets (15) among at least one pair or one group is smaller than the distance to an adjacent pair or a group of air outlets (15).

14. The pneumatic conveying device (4) according to Claim 12, **characterised in that** two of the metering devices (16) each are arranged downstream in the conveying direction (FR) of each pair of air outlets (15), wherein both metering devices (16) are connectible to both connecting lines (L1, L2, L3, ... L8) assigned to the respective air outlets (15) in order to optionally supply the material of a metering device (16) or both metering devices (16) to a connecting line (L1, L2, L3, ... L8) or both connecting lines (L1, L2, L3, ... L8).

15. The pneumatic conveying device (4) according to Claim 13, **characterised in that** each metering device (16) comprises a change-over element actuatable manually or by an actuator, which connects or disconnects the respective metering device (16) to/from one or both connecting lines (L1, L2, L3, ... L8) .

16. An agricultural distribution machine (2) for conveying granular material taken from at least one storage container (6) having a pneumatic conveying device (4) according to any one of the Claims 1 to 14.

## Revendications

1. Dispositif de convoyage (4) pneumatique, destiné à convoyer une matière grenue ou granulaire, notamment des semences et / ou des fertilisants, comprenant au moins une soufflerie (5), dotée d'au moins une sortie (10), sur laquelle est raccordée au moins une conduite d'alimentation d'air (11) principale, dans laquelle afflue un débit volumique d'air (12), généré par la soufflerie (5) d'un dispositif distributeur d'air (14), pour commander le débit volumique d'air (12), le dispositif distributeur d'air (14) comportant un nombre pair ou divisible par trois de sorties d'air (15), sur chacune desquelles est raccordée une conduite de liaison (L1, L2, L3, ..., L8), sur laquelle est raccordé un dispositif de dosage (16), destiné à alimenter la matière grenue, le dispositif distributeur d'air (14) étant réalisé sous la forme d'un carter (17) cylindrique, doté d'une vanne rotative (18) placée en son intérieur, qui est configurée pour faire varier une section transversale d'échappement des sorties d'air (15), pour manipuler le débit volumique d'air (12) pour le transport de la matière grenue arrivant du dispositif de dosage (16) concerné.

2. Dispositif de convoyage (4) pneumatique selon la revendication 1, **caractérisé en ce que** sur la vanne rotative (18) est placé un actionneur (19), à l'aide duquel la vanne rotative (18) est actionnable de manière manuelle ou automatique.

3. Dispositif de convoyage (4) pneumatique selon la revendication 1 ou 2, **caractérisé en ce que** la vanne rotative (18) est ajustable en phases discrètes ou en continu.

4. Dispositif de convoyage (4) pneumatique selon l'une quelconque des revendications 1 à 3, **caractérisé en ce que** le carter (17) présente une forme cylindrique circulaire.

5. Dispositif de convoyage (4) pneumatique selon l'une quelconque des revendications précédentes, **caractérisé en ce que** la vanne rotative (18) est réalisée sous la forme d'un segment (24) en forme d'arc, susceptible de pivoter autour d'un axe longitudinal (20) du carter (17), qui comporte des évidements (25) s'étendant par endroits dans la direction périphérique du segment (24), qui en fonction d'une position pivotée réglée du segment (24) en forme d'arc, coopèrent avec les sorties d'air (15) du boîtier (17).

6. Dispositif de convoyage (4) pneumatique selon la revendication 5, **caractérisé en ce que** les évidements (25) présentent dans la direction périphérique du segment (24) une extension (L), laquelle correspond au moins au double d'un diamètre (D) de la section transversale d'échappement des sorties d'air (15).

7. Dispositif de convoyage (4) pneumatique selon l'une quelconque des revendications 5 ou 6, **caractérisé en ce que** dans la direction axiale, les évidements (25) présentent une largeur (B), laquelle correspond au moins au diamètre (D) de la section transversale d'échappement des sorties d'air (15) ou dépasse celle-ci.

8. Dispositif de convoyage (4) pneumatique selon l'une quelconque des revendications 5 à 7, **caractérisé en ce qu'**à proximité d'une conduite d'alimentation d'air (11) principale, les évidements (25) présentent une section d'ouverture moindre ou une largeur (B) moindre que des évidements (25) plus éloignés de la conduite d'alimentation d'air (11) principale.

9. Dispositif de convoyage (4) pneumatique selon l'une quelconque des revendications 5 à 7, **caractérisé en ce que** les évidements (25) présentent une section transversale d'ouverture de forme sensiblement elliptique.

10. Dispositif de convoyage (4) pneumatique selon l'une quelconque des revendications 5 à 8, **caractérisé en ce que**, considérés dans la direction périphérique de la vanne rotative (18), les évidements (25) sont placés avec un décalage mutuel variable dans la direction périphérique.

11. Dispositif de convoyage (4) pneumatique selon l'une quelconque des revendications 1 à 9, **caractérisé en ce que** les sorties d'air (15) sont placées côte à côte de manière parallèle à l'axe de l'axe longitudinal (20) du carter (17) dans celui-ci.

12. Dispositif de convoyage (4) pneumatique selon la revendication 10, **caractérisé en ce que** l'au moins une conduite d'alimentation d'air (11) principale est placée au vis-à-vis des sorties d'air (15) sur le carter (17) ou de manière coaxiale par rapport au carter (17).

13. Dispositif de convoyage (4) pneumatique selon la revendication 10 ou 11, **caractérisé en ce que** les sorties d'air (15) sont placées côte à côte par paires ou par groupe de trois, l'écart mutuel entre les sorties d'air (15) d'au moins une paire ou d'un groupe étant plus faible que l'écart par rapport à une paire voisine ou à un groupe de sorties d'air (15).

14. Dispositif de convoyage (4) pneumatique selon la revendication 12, **caractérisé en ce qu'**en aval de chaque paire de sorties d'air (15) dans la direction de convoyage (FR) sont montés chaque fois deux des dispositifs de dosage (16), les deux dispositifs de dosage (16) étant susceptibles d'être reliés avec les deux des conduites de liaison (L1, L2, L3, ..., L8) affectées aux sorties d'air (15) concernées, pour alimenter sélectivement la matière vers un dispositif de dosage (16) ou vers les deux dispositifs de dosage (16) d'une conduite de liaison (L1, L2, L3, ..., L8) ou des deux conduites de liaison (L1, L2, L3, ..., L8).

15. Dispositif de convoyage (4) pneumatique selon la revendication 13, **caractérisé en ce que** chaque dispositif de dosage (16) comporte un élément inverseur actionnable manuellement ou par un actionneur, lequel relie le dispositif de dosage (16) concerné avec l'une ou les deux conduites de liaison (L1, L2, L3, ..., L8) ou les désolidarise de celles-ci.

16. Épandeur agricole (2), destiné à convoyer une matière grenue prélevée dans au moins un réservoir de stockage (6), doté d'un dispositif de convoyage (4) pneumatique selon l'une quelconque des revendications 1 à 14.
